# EUROPEAN PATENT SPECIFICATION

(11) **EP 4 082 936 B1**
(45) Date of publication and mention of the grant of the patent: **18.10.2023**
(21) Application number: 21171712.9
(22) Date of filing: 30.04.2021
(51) Int. Cl.: B65D 81/38, B65D 83/00

(54) **CONTAINER FOR A PREFERABLY VISCOUS FLUID**
BEHÄLTER FÜR EIN VORZUGSWEISE VISKOSES FLUID
RÉCEPTACLE POUR UN FLUIDE DE PRÉFÉRENCE VISQUEUX

(43) Date of publication of application: 02.11.2022
(73) Proprietor: Venrath, Jule Lucia, 70188 Stuttgart (DE)
(72) Inventor: Venrath, Jule Lucia, 70188 Stuttgart (DE)
(74) Representative: Meyer zu Bexten, Elmar

(56) References cited:
- GB-A- 2 536 886
- US-A1- 2006 065 132
- US-A1- 2010 230 438
- US-B2- 7 641 078

## Description

### Technical Field

The invention relates to a container for a preferably viscous fluid according to the preamble of Claim 1.

### Background Art

In packaging, by container is meant any receptacle or enclosure for holding a product used in storage, packaging, and transportation, including shipping (cf. NPL1 see paragraph [0038]).

PTL1: US677851A discloses a container for a viscous fluid having a compressible outer body and an inner body opening out of the container and comprising the fluid. PTL2: GB2536886A discloses the subject matter of the preamble of Claim 1.

### Summary of invention

The invention is set out in the appended set of claims.

### Technical Problem

In a container for viscous substances, especially liquids, discharge may be effected by, for example, folding or pumping action exerted by a means provided atop the container. Complete emptying of a conventional container in most cases cannot be achieved. Some residues may be removed by the action of gravity. However, for substances of higher viscosity, retrieving residues from the container remains a challenge. Furthermore, the shelf life of the fluid may be adversely affected by ambient air entering the container as it is being emptied.

The invention aims to facilitate an almost complete discharge of a container, regardless of gravity. Moreover, the viscous fluid is to be preserved in vacuum to prolong its shelf life.

### Solution to Problem

The problem is solved as per the characterising portion of Claim 1. Specifically, the fluid is dispensed by manual pressure on the airtight container. Air retained in the space between the two packaging bodies transfers the force to the fluid inside the inner body. The overpressure induced by this pumping action unloads the fluid from an orifice of the inner body.

### Advantageous effect of invention

By means of an embodiment according to the invention, a container can be depleted entirely. Since the air pressure inside the packaging forces the fluid towards its egress port, the contents may even be extracted against the force of gravity acting on the device. Therefore, the container could be firmly anchored in place, its aperture facing up, and still be completely emptied.

The invention further satisfies the requirements of sustainability by minimizing consumption of resources as compared to a conventional container. To this end, the outer body of the container is reusable and may thus be optimized for quality. Its inner body can be manufactured from only a thin fabric in the shape of a bag, pouch, or pocket, equipped with a delicate fastener at its outlet and devoid of any valve.

Owing to the captive air enclosed between its outer and inner bodies, the proposed container exhibits improved thermal insulation, akin to the operating principle of a vacuum flask.

For easy and safe handling, the container is equipped with a replaceable pouch arranged beyond the cavity containing the captive air. With no sealing of the pouch being required vis-à-vis any other part of the container, replenishment of the latter may be considered virtually foolproof.

Moreover, clogging of fluid near the outlet is effectively prevented.

### Brief description of drawings

Figure 1, which is not part of the invention, is a longitudinal section of an outer body.
Figure 2, which is not part of the invention, is a longitudinal section of an inner body
Figure 3, which is not part of the invention, is a longitudinal section of a first container
Figure 4 is a longitudinal section of a second container.

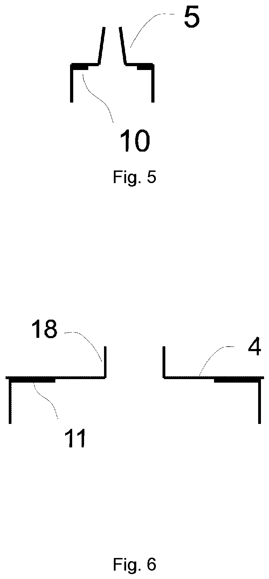

Figure 5 is a longitudinal section of a nozzle.
Figure 6 is a longitudinal section of a lid.

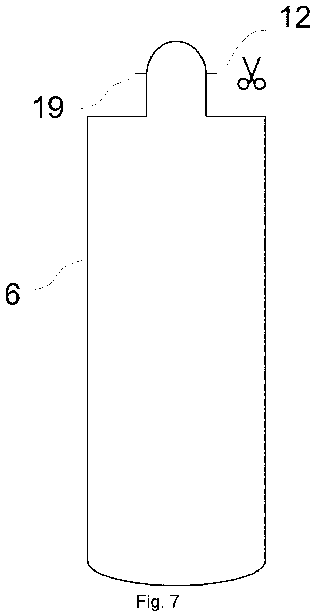

Figure 7 is a longitudinal section of a pouch.

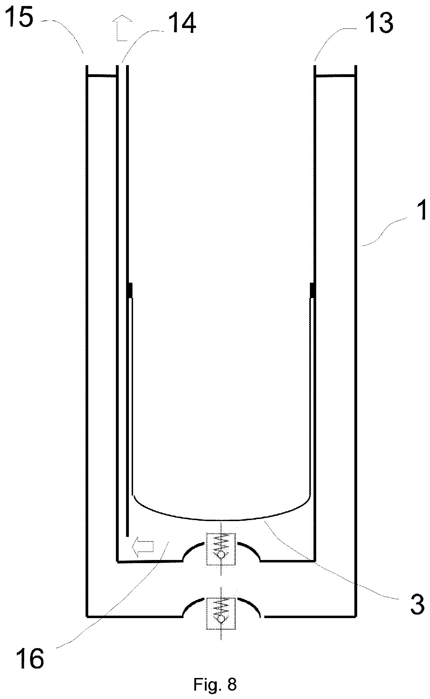

Figure 8 is a longitudinal section of the second container in an opened state.

### Description of embodiments

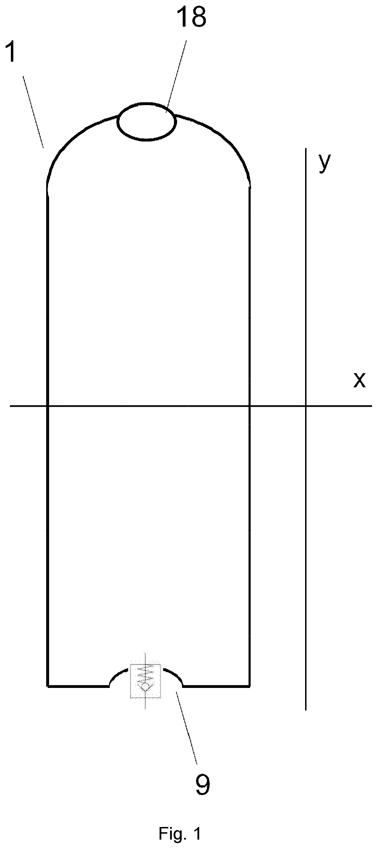

Figure 1, which is not part of the invention, shows an elastic outer body (1) having a collar (18) formed at its upper end. The outer body (1) may be opened along an axis (x, y) by means of a rear hinge or similar device. Alternatively, the outer body (1) could be split along either axis (x, y) and re-joined into its original shape by screwing, clicking, or the like.

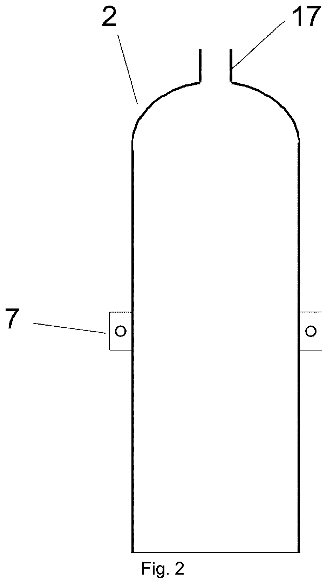

Figure 2, which is not part of the invention, shows an inner body (2) having a threaded outlet (17) formed at its upper end that joins tightly into the collar (18) of Figure 1. Wholly or in part, the inner body (2) may be equipped with fixing members or tab-like protrusions to fixate it within the outer body (1).

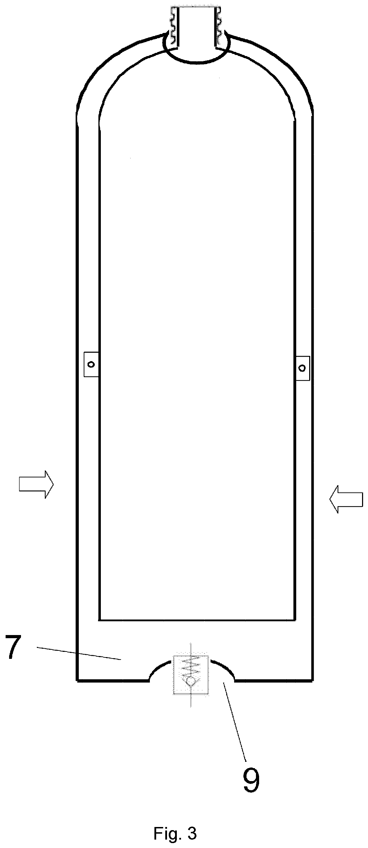

Figure 3, which is not part of the invention, shows the outer body (1) and inner body (2) in their envisaged interlocked configuration, the inner body (2) opening out of the container through the collar (18) and outlet (17). As may be gathered from this drawing, a cavity (7) is formed peripherally about the inner body (2) and contains captive air enclosed between the outer body (1) and inner body (2). When compressive force is applied upon the outer body (1), the latter displaces the captive air.

In the embodiment at hand, the inner body (2) is deformable. Since the encasing outer body (1) prevents the displaced air from escaping into the atmosphere, the air thus compresses the inner body (2) which, when filled with fluid, in turn discharges a corresponding volume of said fluid through its outlet (17). As its fluid is gradually expelled, the inner body (2) contracts into itself.

A check valve (9) is fitted in the outer body (1) opposite its collar (18 - Figure 1). Hence, when the force subsides and the outer body (1) is decompressed, the inner body (2) may remain contracted while the added volume of the cavity (7) is filled with ambient air aspirated through the check valve (9) until the outer body (1) is fully restored.

As the compression is repeated, the pliable inner body (2) of the present embodiment will progressively decrease in volume and release its contents as required, with the check valve (9) provided on the outer body (1) supplying air to the ever-increasing volume of the cavity. Upon depletion, the inner body (2) may be conveniently removed from the container and replaced whilst the outer body (1) can be reused indefinitely.

Figure 1, Figure 2, and Figure 3 are not encompassed by the wording of the claims but are considered as useful for understanding the invention.

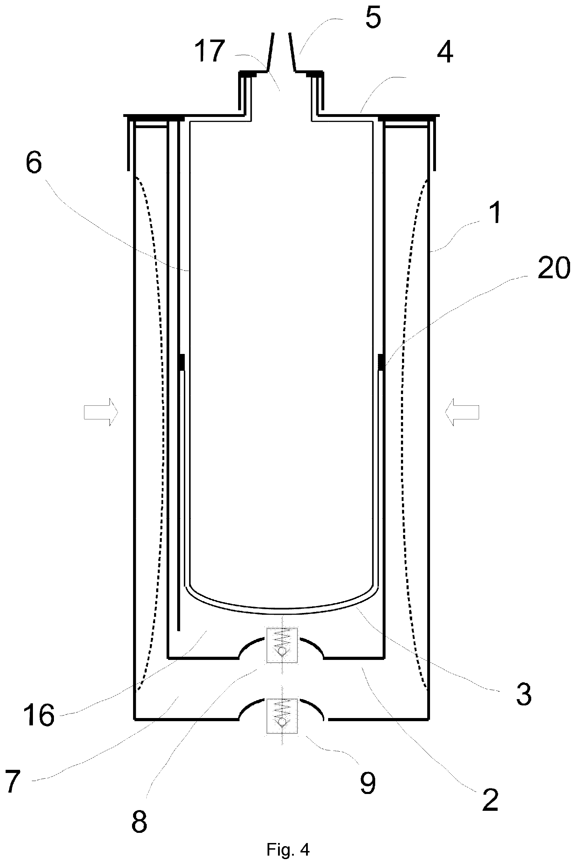

Figure 4 et seqq. show a rigid inner body (2) that opens out of the container through a removable lid (4), wherein the rigid inner body (2) is lined with an integral pouch (3). Form-fit within the inner body (2) between said integral pouch (3) and lid (4) is a further, replaceable pouch (6) - such as of textile or plastic - that contains the actual fluid.

The force transferred onto the inner body (2) acts indirectly on the replaceable pouch (6) through the integral pouch (3). To this end, a check valve (8) is fitted in the inner body (2) opposite the lid (4). When compressed, the outer body (1) - due to the rigidity of the inner body (2) - diminishes the cavity (7) and expels the captive air into the inner body (2) through the valve (8). The latter opens out into a second cavity (16) - formed in the inner body (2) opposite the lid (4) -, into which the captive air is thus impelled. As this fluid communication progresses and the entering captive air accumulates in the second cavity (16), it gradually everts the integral pouch (3) toward the lid (4). In the process, the integral pouch (3) displaces and compresses the replaceable pouch (6), extruding, via a mouth (12) formed in the same, the fluid through a nozzle (5) mounted upon the lid (4).

As soon as the force subsides and the outer body (1) decompresses, pressure in the diminished cavity drops. To equalize the resulting underpressure and allow for the outer body (1) to return to its original shape and volume, a second check valve (9) is fitted in the outer body (1) opposite the lid (4). Through this second check valve (9), the expelled captive air is replaced by ambient air until the first cavity (7) is fully restored. This way, the squeezing action may be repeated at will until the fluid depletes, at which point the replaceable pouch (6) eventually nestles up against the lid (4) and into the nozzle (5).

To seal the first cavity (7), a gasket (11) is integrated with the lid (4) and form-fits corresponding sealing edges (13, 15) formed around the inner body (2) and outer body (1). Similarly, to prevent captive air from bypassing the pouches (3, 6) and escaping the second cavity (16) through the nozzle (5), an airproof retainer (20) around the integral pouch (3) attaches circumferentially to the inner body (2) halfway between the lid (4) and first check valve (8).

For replenishment of the container, its lid (4) may be removed, and the emptied replaceable pouch (6) disposed. As soon as the container opens, the captive air can escape from the second cavity (16) through a vent (14) extending along the inner body (2) to its sealing edge (13), allowing for the integral pouch (3) to revert to its former shape. With configuration of the inner body (2) thus restored, a compatible replacement pouch may be inserted atop the integral pouch (3) and hooked in the collar (18) by means of an integrated member (19) before attaching the lid (4). Another fastening member (10) is integrated with the nozzle (5) and form-fits the lid (4), outlet (17), and collar (18), securing the nozzle (5) as the container is re-readied for operation.

The arrangement according to the invention allows the inner body (2) to be completely emptied. For this purpose - instead of or in addition to the retainer (20) - the integral pouch (3) and body (2) may exhibit complementary fastening elements, rails, tracks, or similar. Such elements may be disposed in a horizontal or vertical straight line or plane and are adapted in number, design, and arrangement to the body (2) with respect to form and function.

### Industrial applicability

The invention is applicable, among others, throughout the packaging industry.

### Reference signs list

- 1: Outer body
- 2: Inner body
- 3: Integral pouch
- 4: Lid
- 5: Nozzle
- 6: Replaceable pouch
- 7: First cavity
- 8: First check valve
- 9: Second check valve
- 10: First fastening member
- 11: Sealing gasket
- 12: Mouth
- 13: First sealing edge
- 14: Vent
- 15: Second sealing edge
- 16: Second cavity
- 17: Outlet
- 18: Collar
- 19: Second fastening member
- 20: Retainer

### Citation list

The following documents are cited hereinbefore.

### Patent literature

PTL1: US 677851 A (BOOTH THOMAS C [US]) 09.07.1901
PTL2: GB 2536886 A (TINASHE ALLEN CHIPAWE [GB]) 05.10.2016

### Non-patent literature

NPL1: SOROKA, Walter. Illustrated Glossary of Packaging Terminology. Lancaster, PA, USA: DEStech Publications, Inc., 2008. ISBN 1930268270. p.51.

## Claims

1. Container for a preferably viscous fluid having
a compressible, preferably elastic, outer body (1) and
an inner body (2) opening out of the container and comprising the fluid,
wherein
captive air is enclosed between the outer body (1) and inner body (2) and the inner body (2) is affixed within the outer body (1) such that when compressive force is applied upon the outer body (1), the captive air transfers the force unto the inner body (2), displacing and discharging the fluid from the container,
**characterized in**
a preferably textile integral pouch (3) lining the inner body (2),
a removable lid (4) form-fit to both the outer body (1) and inner body (2),
a nozzle (5) mounted upon the lid (4),
a preferably textile or plastic replaceable pouch (6) form-fit within the inner body (2) between the integral pouch (3) and lid (4) and containing the fluid,
a first cavity (7) formed peripherally about the inner body (2) and containing the captive air, and
a mouth (12) formed in the replaceable pouch (6) and protruding from the lid (4) into the nozzle (5), wherein
the inner body (2) opens out through the lid (4) into the nozzle (5) and is rigid and in fluid communication with the first cavity (7) such that under said force, the outer body (1) diminishes the first cavity (7) and expels the captive air into the inner body (2),
the captive air entering the inner body (2) gradually everts the integral pouch (3) toward the lid (4), and
the integral pouch (3) extrudes the fluid via the mouth (12) through the nozzle (5) while it progressively displaces and compresses the replaceable pouch (6) until the replaceable pouch (6) nestles up against the lid (4) and into the nozzle (5).

2. Container as per Claim 1
**characterized in**
a preferably spring-loaded first check valve (8) fitted, preferably opposite the lid (4), in the inner body (2) such that the communication is unidirectional from the first cavity (7) to the inner body (2).

3. Container as per Claim 2
**characterized in**
a preferably spring-loaded second check valve (9) fitted, preferably opposite the lid (4), in the outer body (1) such that when the force subsides and the outer body (1) decompresses, the expelled captive air is replaced by ambient air through the second check valve (9) and the first cavity (7) restored.

4. Container as per Claim 3
**characterized in**
a first fastening member (10) integrated with the nozzle (5) and form-fit to the lid (4).

5. Container as per Claim 4
**characterized in**
a sealing gasket (11) integrated with the lid (4),
a first sealing edge (13) formed around the inner body (2), and
a second sealing edge (15) formed around the outer body (1), wherein the gasket (11) form-fits the sealing edges (13, 15).

6. Container as per Claim 5
**characterized in**
a second cavity (16) formed in the inner body (2) opposite the lid (4), wherein the first check valve (8) opens out into the second cavity (16) such that under said force, the captive air is impelled into the second cavity (16).

7. Container as per Claim 5 or Claim 6
**characterized in**
a vent (14) extending from the first sealing edge (13) along the inner body (2) to the second cavity (16) such that when the lid (4) is removed and the integral pouch (3) reverted, for example, by replacing the replaceable pouch (6) when the fluid is depleted, the captive air escapes from the second cavity (16) through the vent (14).

8. Container as per any of Claim 4 through Claim 7
**characterized in**
an outlet (17) formed in the inner body (2) or replaceable pouch (6) and
a collar (18) formed in the lid (4), wherein
the first fastening member (10) form-fits the outlet (17) and collar (18).

9. Container as per Claim 8
**characterized in**
a second fastening member (19) integrated with the replaceable pouch (6), preferably around the mouth (12), and form-fit to the collar (18).

10. Container as per any of Claim 2 through Claim 9
**characterized in**
an airproof retainer (20) formed, preferably halfway between the lid (4) and first check valve (8), around the integral pouch (3) and attaching circumferentially to the inner body (2).

## Patentansprüche

1. Behälter für eine vorzugsweise viskose Flüssigkeit bestehend aus
einem komprimierbaren, vorzugsweise elastischen äußeren Körper (1) und einem inneren Körper (2) mit Öffnung zur Außenseite des Behälters zur Aufnahme der Flüssigkeit,
wobei
Luft zwischen dem äußeren Körper (1) und dem inneren Körper (2) eingeschlossen und der innere Körper (2) mit dem äußeren Körper (1) so verbunden ist, dass bei Einwirkung einer äußeren komprimierenden Kraft auf den äußeren Körper (1) die eingeschlossene Luft diese Kraft auf den inneren Körper (2) überträgt und dadurch die Flüssigkeit verdrängt und aus dem Behälter herausdrückt,
**gekennzeichnet durch**
einen vorzugsweise textilen integrierten Beutel (3), der den inneren Körper (2) auskleidet,
einen entfernbaren Verschluss (4), der formschlüssig sowohl mit dem äußeren Körper (1), als auch dem inneren Körper (2) verbunden ist,
eine Düse (5), die an dem Verschluss (4) befestigt ist,
einen vorzugsweise textilen oder aus Plastik bestehenden austauschbaren Beutel (6), der formschlüssig im inneren Körper (2) zwischen dem integrierten Beutel (3) und dem Verschluss (4) angebracht ist und die Flüssigkeit enthält, einen ersten Hohlraum (7) um den inneren Körper (2), der die eingeschlossene Luft enthält und
einer Mündung (12) des austauschbaren Beutels (6), die durch den Verschluss (4) bis zur Düse (5) vorsteht, wobei
der innere Körper (2) sich durch die den Verschluss (4) und die Düse (5) zur Außenseite des Behälters öffnet und starr ist und durch Druckausgleich mit dem ersten Hohlraum (7) bewirkt, dass unter besagter Kraft der äußere Körper (1) den ersten Hohlraum (7) verkleinert und die eingeschlossene Luft in den inneren Körper (2) drückt,
die eingeschlossene Luft in den inneren Körper (2) eintritt und sukzessive den integrierten Beutel (3) in Richtung des entfernbaren Verschlusses (4) einstülpt,
und
der integrierte Beutel (3) die Flüssigkeit über die Mündung (12) durch die Düse (5) herausdrückt, während er sukzessive den austauschbaren Beutel (6) verdrängt und komprimiert, bis der austauschbare Beutel (6) am Verschluss (4) und in der Düse (5) anliegt.

2. Behälter nach Anspruch 1
**gekennzeichnet durch**
ein vorzugsweise federbelastetes erstes Rückschlagventil (8) am inneren Körper (2), vorzugsweise auf der dem Verschluss (4) gegenüberliegenden Seite, sodass der Druckausgleich nur in Richtung vom ersten Hohlraum (7) hin zum inneren Körper (2) erfolgt.

3. Behälter nach Anspruch 2
**gekennzeichnet durch**
ein vorzugsweise federbelastetes zweites Rückschlagventil (9) am äußeren Körper (1), vorzugsweise auf der dem Verschluss (4) gegenüberliegenden Seite, sodass beim Nachlassen besagter Kraft und Rückkehr des äußeren Körpers (1) zu seiner ursprünglichen Form, die verdrängte eingeschlossene Luft durch das zweite Rückschlagventil (9) durch Außenluft ersetzt und der erste Hohlraum (7) wiederhergestellt wird.

4. Behälter nach Anspruch 3
**gekennzeichnet durch**
ein erstes Befestigungselement (10) als Bestandteil der Düse (5), das formschlüssig mit dem Verschluss (4) verbunden ist.

5. Behälter nach Anspruch 4
**gekennzeichnet durch**
eine Dichtung (11) als Bestandteil des Verschlusses (4),
eine erste Dichtkante (13) entlang des inneren Körpers (2) und
eine zweite Dichtkante (15) entlang des äußeren Körpers, wobei die Dichtung (11) formschlüssig mit den Dichtkanten (13, 15) verbunden ist.

6. Behälter nach Anspruch 5
**gekennzeichnet durch**
einen zweiten Hohlraum (16) im inneren Körper (2) gegenüber dem Verschluss (4), wobei
das erste Rückschlagventil (8) in den zweiten Hohlraum (16) führt, sodass unter besagter Kraft die eingeschlossene Luft in den zweiten Hohlraum gedrückt wird.

7. Behälter nach Anspruch 5 oder Anspruch 6
**gekennzeichnet durch**
eine Lüftungsöffnung (14) von der ersten Dichtkante (13) entlang des inneren Körpers (2) zum zweiten Hohlraum (16), sodass beim Öffnen des Verschlusses (4) und Zurückstülpen des integrierten Beutels (3), beispielsweise durch Ersatz des entleerten austauschbaren Beutels (6), die eingeschlossene Luft aus dem zweiten Hohlraum (16) durch die Lüftungsöffnung (14) entweicht.

8. Behälter nach einem der Ansprüche 4 bis 7
**gekennzeichnet durch**
einen Auslass (17) am inneren Körper (2) oder am austauschbaren Beutel (6) und
ein Kragen (18) am Verschluss (4), wobei
das erste Verbindungselement (10) formschlüssig mit dem Auslass (17) und dem Kragen (18) verbunden ist.

9. Behälter nach Anspruch 8
**gekennzeichnet durch**
ein zweites Verbindungselement (19) als Bestandteil des austauschbaren Beutels (6), vorzugsweise um die Mündung (12) herum, welches formschlüssig mit dem Kragen (18) verbunden ist.

10. Behälter nach einem der Ansprüche 2 bis 9
**gekennzeichnet durch**
einen luftdichten Haltering (20) am integrierten Beutel (3), der umlaufend im inneren Körper (2) befestigt ist, vorzugsweise auf halber Strecke zwischen dem Verschluss (4) und dem ersten Rückschlagventil (8).

## Revendications

1. Récipient pour un fluide de préférence visqueux comportant
un corps extérieur (1) compressible, de préférence élastique, et
un corps intérieur (2) s'ouvrant à l'extérieur du récipient et contenant le fluide,
dans lequel
de l'air captif est enfermé entre le corps extérieur (1) et le corps intérieur (2) et le corps interne (2) est fixé à l'intérieur du corps externe (1) de sorte que lorsqu'une force de compression est appliquée sur le corps externe (1), l'air captif transfère la force au corps interne (2), déplaçant et évacuant le fluide du conteneur, **caractérisé par**
une poche intégrale (3), de préférence en textile, tapissant le corps intérieur (2), un couvercle amovible (4) ajusté à la fois au corps extérieur (1) et au corps intérieur (2),
une buse (5) montée sur le couvercle (4),
une poche remplaçable (6), de préférence en textile ou en plastique, ajustée à l'intérieur du corps interne (2) entre la poche intégrale (3) et le couvercle (4) et contenant le fluide,
une première cavité (7) formée à la périphérie du corps interne (2) et contenant l'air captif, et
une bouche (12) formée dans la poche remplaçable (6) et faisant saillie du couvercle (4) vers la buse (5), dans laquelle
le corps interne (2) s'ouvre à travers le couvercle (4) dans la buse (5) et est rigide et en communication fluide avec la première cavité (7) de sorte que, sous l'effet de cette force, le corps externe (1) diminue la première cavité (7) et expulse l'air captif dans le corps interne (2),
l'air captif pénétrant dans le corps intérieur (2) fait progressivement descendre la poche intégrale (3) vers le couvercle (4), et
la poche intégrale (3) extrude le fluide par la bouche (12) à travers la buse (5) tout en déplaçant et en comprimant progressivement la poche remplaçable (6) jusqu'à ce que la poche remplaçable (6) s'emboîte contre le couvercle (4) et dans la buse (5).

2. Récipient selon la revendication 1
**caractérisé par**
un premier clapet anti-retour (8), de préférence à ressort, monté, de préférence à l'opposé du couvercle (4), dans le corps intérieur (2), de sorte que la communication soit unidirectionnelle entre la première cavité (7) et le corps intérieur (2).

3. Récipient selon la revendication 2
**caractérisé par**
un second clapet anti-retour (9), de préférence à ressort, monté, de préférence à l'opposé du couvercle (4), dans le corps extérieur (1), de sorte que lorsque la force s'atténue et que le corps extérieur (1) se décompresse, l'air captif expulsé est remplacé par de l'air ambiant à travers le second clapet anti-retour (9) et la première cavité (7) est rétablie.

4. Récipient selon la revendication 3
**caractérisé par**
un premier élément de fixation (10) intégré à la buse (5) et ajusté au couvercle (4).

5. Récipient selon la revendication 4
**caractérisé par**
un joint d'étanchéité (11) intégré au couvercle (4),
un premier bord d'étanchéité (13) formé autour du corps intérieur (2), et
un second bord d'étanchéité (15) formé autour du corps extérieur (1), dans lequel le joint (11) épouse les bords d'étanchéité (13, 15).

6. Récipient selon la revendication 5
**caractérisé par**
une deuxième cavité (16) formée dans le corps intérieur (2) à l'opposé du couvercle (4), dans laquelle
le premier clapet anti-retour (8) débouche dans la seconde cavité (16) de sorte que, sous l'effet de cette force, l'air captif est expulsé dans la seconde cavité (16).

7. Récipient selon la revendication 5 ou la revendication 6
**caractérisé par**
un évent (14) s'étendant du premier bord d'étanchéité (13) le long du corps intérieur (2) jusqu'à la seconde cavité (16) de sorte que lorsque le couvercle (4) est retiré et que la poche intégrale (3) est retournée, par exemple en remplaçant la poche remplaçable (6) lorsque le fluide est épuisé, l'air captif s'échappe de la seconde cavité (16) à travers l'évent (14).

8. Récipient selon l'une quelconque des revendications 4 à 7
**caractérisé par**
une sortie (17) formée dans le corps interne (2) ou la poche remplaçable (6) et un col (18) formé dans le couvercle (4), dans lequel
le premier élément de fixation (10) s'adapte à la sortie (17) et à la collerette (18).

9. Récipient selon la revendication 8
**caractérisé par**
un deuxième élément de fixation (19) intégré à la poche remplaçable (6), de préférence autour de l'embouchure (12), et ajusté à la collerette (18).

10. Récipient selon l'une des revendications 2 à 9
**caractérisé par**
un dispositif de retenue étanche à l'air (20) formé, de préférence à mi-chemin entre le couvercle (4) et le premier clapet anti-retour (8), autour de la poche intégrée (3) et fixé circonférentiellement au corps intérieur (2).
